# EUROPEAN PATENT APPLICATION

(11) **EP 1 876 002 A2**
(43) Date of publication of application: **09.01.2008**
(21) Application number: 07252715.3
(22) Date of filing: 06.07.2007
(51) Int. Cl.: B29C 41/04, B29C 41/22

(54) **Hollow article forming method**

(30) Priority: 08.07.2006 GB 0613600
(71) Applicant: Gordon Ellis & Co., Castle Donington, Derby DE74 2NP (GB)
(72) Inventor: Devereux, Mark, Castle Donington Derby DE74 2NP (GB)
(74) Representative: Sales, Robert Reginald

(57) **Abstract**

A method of forming a twin skinned hollow article (10) includes rotationally moulding a first material in a mould tool (20) to form an outer layer (14) for the article. During the moulding process, one or more blank members (30) to which the first material does not adhere during moulding are located in the mould tool such that the outer layer is incomplete at the location of the or each blank member. Subsequently, an inner layer (12) of a second material is rotationally moulded within the outer layer.

## Description

This invention concerns a method of forming twin skinned hollow articles, and also articles and water tanks made by such a method.

With articles such as tanks for liquids, it is often required for these to have two layers of materials with different properties. This may be to provide insulation, strength, multiple colours, or to satisfy different internal and external requirements. An example of such an article is a water tank which could be used for instance on caravans or motor homes etc. This article is required to have an inner layer of food grade material, with an outer layer which provides appropriate thermal insulation, and particularly to prevent freezing. Materials which provide appropriate thermal insulation are often of a type which should not come into contact with drinking water.

To date it has not been possible to successfully rotationally mould such products with an outer skin of foam. One reason for this is that it has not been possible to provide external features on the tank that are not coated with a foam insulating material skin. Such features could be to provide an inlet or outlet from the tank, a label on the tank, or mounting locations for the tank.

According to the present invention there is provided a method of forming a twin skinned hollow article, the method including rotationally moulding a first material in a mould tool to form an outer layer for the article, during the moulding process one or more blank members to which the first material does not adhere to during moulding are located in the mould tool such that the outer layer is incomplete at the location of the or each blank member, subsequently rotationally moulding an inner layer of a second material within the outer layer.

The or one or more of the blank members may be removed between the moulding of the outer and inner layers to permit moulding of the inner layer at the previous location of the or the one or more blank members.

The, or the one or more blank members, may be replaced between the moulding of the outer and inner layers by a profile tool section to form a profiled feature in the inner layer. For example, a profile tool section may be threaded to provide a thread on the inner layer. A profiled tool section may be profiled to provide a written message or indication on a part of the inner layer which is not covered by the outer layer.

The or each blank member may have at least an outer surface of a material to which the first material does not adhere during moulding, and the or each blank member may have a PTFE or TEFLON® coating.

The first and second materials may be different materials, or at least different forms of the same material. The first material may be foamed. The first and/or second materials may be MDPE.

At least the second material may be supplied into the mould tool through a fill port.

The invention also provides a hollow article formed by a method according to any of the preceding six paragraphs.

The invention further provides a water tank formed by a method according to any of said preceding six paragraphs.

An embodiment of the present invention will now be described by way of example only and with reference to the accompanying drawings, in which:-
Fig. 1 is a diagrammatic partially cut away perspective view of an article according to the invention; and
Fig. 2 is a similar view to Fig. 1 illustrating diagrammatically the article of Fig. 1 during formation.

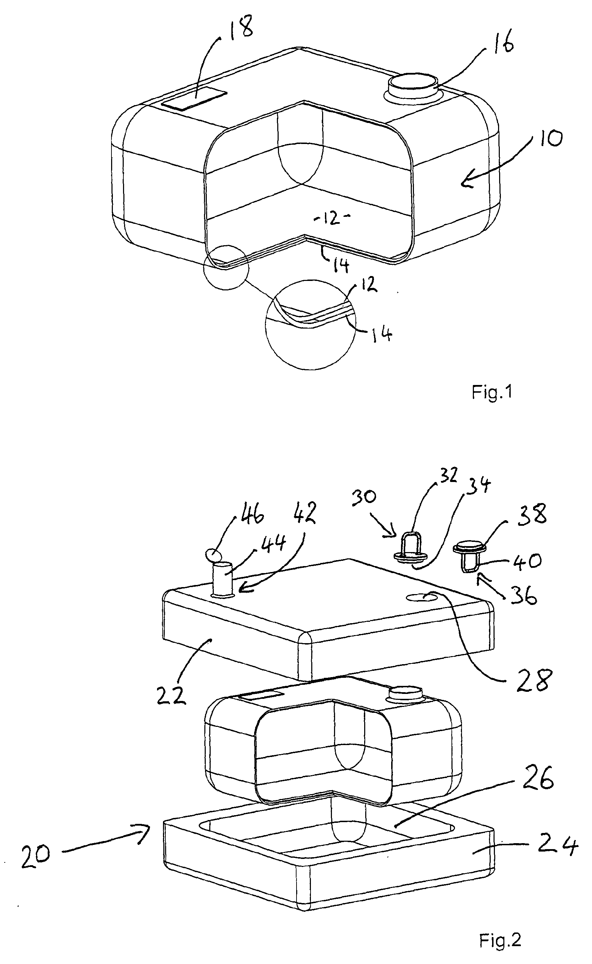

Fig. 1 shows a tank 10 suitable for storing for instance water in a vehicle such as a caravan. The tank 10 is formed with an inner layer 12 of solid MDPE and an outer layer 14 of foamed polyethylene to provide protection and thermal insulation. The tank has on its top surface an upstanding threaded boss 16 to permit a hose or other to be connected thereto, and also an upstanding name plate 18.

Fig. 2 shows the tank 10 and apparatus used to form same. Fig. 2 illustrates a moulding tool 20 usable in rotational moulding. The tool 20 comprises upper and lower parts 22, 24 of aluminium. The parts 22, 24 define a generally rectangular cross section moulding cavity 26.

An aperture 28 is provided through part of the upper part 22. A blank member 30 which has a handle 32 and a circular layer 34 of PTFE is selectively locatable in the aperture 28. Also selectively locatable in the aperture 28 is a profiled tool member 36 which has a threaded section 38 and a handle 40. A filling port 42 is also provided in an opposite corner of the upper part 22 from the aperture 28. The port 42 has a section of pipe 44 with a selectively operable closure 46 extending therefrom.

The tank 10 is formed as follows: A one of the parts 22, 24 is loaded in powder form with MDPE (Matrix polymer M732) which contains a foaming agent, and the tool 20 is closed. The tool is rotated and transferred into a moulding machine oven for typically 14 minutes. The inside of the tool 20 will reach a temperature of 300°C and the material in the cavity 26 will soften and coat the inside faces of the cavity 26.

The blank member 30 is located in the aperture 28, and the softened material will not coat the PTFE layer 34. Further blank members (not shown) with a PTFE coating may be incorporated in the tool 20 including one located in the corner adjacent the filling port 42. This then provides an outer layer which is complete apart from apertures left where the material would not adhere to the blank members.

The blank member 30 is then replaced by the tool member 36, and the blank member adjacent the filling port 42 is removed. Powdered MDPE (Matrix polymer M 638) for the inner layer is then transferred into the tool 20 through the filling port 42.

The tool 20 is again rotated and transferred back into the oven for typically 12 - 13 minutes for the inner layer 12 to be formed by rotational moulding. The tool member 36 causes the threaded boss 16 to be formed in the material of the inner layer 12. Writing may be provided on an appropriate tool member (not shown) to provide the name plate 18 formed of MDPE of the inner layer 12, which tool member extends into the respective opening formed in the outer layer 14.

Once moulding is complete, the tool 20 is removed from the oven and cooled and the tank 10 removed therefrom. The tank 10 can be checked for any defects and undergo any post moulding operations.

There is thus described a method, and articles made by that method, which permit twin layered water tanks and similar products to be formed by rotational moulding. The blank members enable formations and other features to be formed in the inner layer and to protrude through openings produced during moulding in the outer layer. The moulding method is quite repeatable and can thus be used on a continuous basis.

It is to be realised that the tank 10 shown is quite diagrammatic, and other features would probably be required such as for example mounting locations or the like. Various other modifications may be made without departing from the scope of the invention. For instance, different materials may be used. The mould may be a different form or shape, and can be used to produce different articles.

In the described example the blank has a layer of PTFE to prevent adhesion of the softened plastics material thereto. Other heat/adhesion resistive coating could be used instead, such as TEFLON®. The thermal properties of the material chosen prevent adhesion, by reducing the build up of heat and bonding of the moulding polymer to the tool blank.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of forming a twin skinned hollow article (10), **characterised in that** the method includes rotationally moulding a first material in a mould tool (20) to form an outer layer (14) for the article, during the moulding process one or more blank members (30) to which the first material does not adhere to during moulding are located in the mould tool such that the outer layer is incomplete at the location of the or each blank member, subsequently rotationally moulding an inner layer (12) of a second material within the outer layer.

2. A method according to claim 1, in which the or one or more of the blank members are removed between the moulding of the outer and inner layers to permit moulding of the inner layer at the previous location of the or the one or more blank members.

3. A method according to claim 2, in which the, or the one or more blank members, are replaced between the moulding of the outer and inner layers by a profile tool section (36) to form a profiled feature in the inner layer.

4. A method according to claim 3, in which the profile tool section is threaded to provide a thread on the inner layer.

5. A method according to claim 3, in which the profile tool section is profiled to provide a written message or indication on a part of the inner layer which is not covered by the outer layer.

6. A method according to any of the preceding claims, in which the or each blank member has at least an outer surface of a material to which the first material does not adhere during moulding.

7. A method according to claim 6, in which the or each blank member has a PTFE or TEFLON® coating.

8. A method according to any of the preceding claims, in which the first and second materials are different materials, or at least different forms of the same material.

9. A method according to claim 8, in which the first material is foamed.

10. A method according to claims 8 or 9, in which the first and/or second materials is MDPE.

11. A method according to any of the preceding claims, in which at least the second material is supplied into the mould tool through a fill port (42).

12. A hollow article formed by a method according to any of the preceding claims.

13. A water tank formed by a method according to any of claims 1 to 11.
